(19) Europäisches Patentamt / European Patent Office / Office européen des brevets

(11) **EP 2 605 420 B1**

(12) **FASCICULE DE BREVET EUROPEEN**

(45) Date de publication et mention
de la délivrance du brevet:
**12.02.2020 Bulletin 2020/07**

(51) Int Cl.:
*H04B 7/10* *(2017.01)*          *G01S 7/02* *(2006.01)*
*G01S 13/02* *(2006.01)*          *G06K 9/00* *(2006.01)*

(21) Numéro de dépôt: **12197331.7**

(22) Date de dépôt: **14.12.2012**

(54) **Procédé et dispositif pour séparer des émissions électromagnétiques issues de plusieurs émetteurs**

Verfahren und Vorrichtung zur Teilung von aus verschiedenen Sendern stammenden elektromagnetischen Emissionen

Method and apparatus for separating electromagnetic emissions produced by a plurality of emitters

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2011 FR 1103887**

(43) Date de publication de la demande:
**19.06.2013 Bulletin 2013/25**

(73) Titulaire: **THALES**
**92400 Courbevoie (FR)**

(72) Inventeurs:
• **Heurguier, Dominique**
  **92230 GENNEVILLIERS (FR)**
• **Ferreol, Anne**
  **92230 GENNEVILLIERS (FR)**
• **Battut, Thierry**
  **92230 GENNEVILLIERS (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-B1- 6 430 239     US-B1- 6 845 243**
**US-B2- 7 269 223**

• **ALBERA L ET AL: "Blind Identification of Overcomplete MixturEs of sources (BIOME)", LINEAR ALGEBRA AND ITS APPLICATIONS, ELSEVIER SCIENCE PUBLISHING CO., NEW YORK, NY, US, vol. 391, 1 novembre 2004 (2004-11-01), pages 3-30, XP027251466, ISSN: 0024-3795 [extrait le 2004-10-11]**

**Description**

L'objet de l'invention concerne un procédé et un système permettant de séparer des émissions électromagnétiques issues de plusieurs émetteurs ou sources dans le domaine des télécommunications ou encore dans le domaine des radars.

L'un des problèmes techniques lorsque l'on se trouve en présence de plusieurs sources émettrices est de les séparer et ensuite de regrouper les détections élémentaires par émission, c'est-à-dire de réaliser une segmentation des mesures par classification non supervisée plus connue par l'acronyme anglo-saxon « clustering ». Il est donc nécessaire de savoir séparer les émissions provenant de plusieurs sources émettrices et reçues sur plusieurs capteurs ou un réseau antennaire.

L'art antérieur décrit plusieurs méthodes permettant de séparer des signaux en provenance de plusieurs sources ou émetteurs.

Par exemple, la séparation aveugle de sources consiste à estimer un jeu de N sources à partir d'un jeu de P observations qui sont des mélanges de ces sources. Le terme aveugle signifie dans le présent contexte que l'on ne connait pas les signaux a priori.

Il est aussi connu d'effectuer la séparation de signaux en utilisant les paramètres tels que la fréquence, les instants de mesure, les directions d'arrivée. Le procédé mis en œuvre dans l'art antérieur est connu sous l'expression de « classification non supervisée ».

Les techniques utilisées dans l'art antérieur donnent de bons résultats. Toutefois, elles présentent notamment certains inconvénients dont une incapacité à séparer deux émissions électromagnétiques semblables même si elles sont de polarisation différente, En effet, comme elles n'exploitent pas les mesures de polarisation, une confusion est possible entre deux émissions de polarisation différentes, si elles présentent par ailleurs des caractéristiques relativement proches.

Les documents US 7269223 (Learned ey al) et US 6430239 (Ferreol et al) proposent une séparation de signaux en aveugle utilisant la composante de polarisation.

L'objet de l'invention consiste notamment à offrir un procédé pour séparer des détections provenant de deux émissions proches ou similaires, si leur polarisation est différente, ceci en exploitant la polarisation des émissions électromagnétiques reçues sur un capteur.

L'invention concerne un procédé pour désentrelacer des signaux électromagnétiques reçus sur un réseau de capteurs positionnés sur un porteur, ledit réseau de capteurs étant associé à un module de traitement des signaux comportant en combinaison au moins les étapes suivantes :

- acquérir des signaux électromagnétiques issus de plusieurs sources distinctes,
- déterminer un critère de similarité à partir de la mesure de la polarisation desdits signaux électromagnétiques à partir de deux mesures de détection $D_1$ et $D_2$ des signaux électromagnétiques reçus sur le réseau de capteurs en utilisant la distance statistique de Mahalanobis

$$d^2{}_M = \left(V_i - V_j\right)^T \left(M_i + M_j\right)^{-1} \left(V_i - V_j\right)$$

où $V_i$, $V_j$ sont les paramètres de polarisation des détections $D_i$, $D_j$ ; $M_i$, $M_j$ les matrices de covariance associées ; les mesures de polarisation correspondant à $D_i$, $D_j$ sont données, par un vecteur de polarisation complexe $(\alpha, \varphi)$ :

$$V_i = \begin{bmatrix} \alpha_i \\ \varphi_i \end{bmatrix} \text{ paramètres de polarisation de la détection } D_i$$

$$V_j = \begin{bmatrix} \alpha_j \\ \varphi_j \end{bmatrix} \text{ paramètres de polarisation de la détection } D_j$$

l'exposant $^T$ est le signe de transposé et l'indice $_M$ est la signification de Mahalanobis, et en calculant une mesure de similarité en polarisation par la formule:

$$s(V_1, V_2) = \max\left\{0, \quad 1 - \beta.\sqrt{(V_1 - V_2)^T (M_1 + M_2)^{-1} (V_1 - V_2)}\right\}$$ où $\beta$ est un coefficient d'ajustement qui est fixé en choisissant un seuil sur la distance de Mahanalobis,

- utiliser ledit critère de similarité dans une méthode de classification non supervisée de données afin de séparer les sources.

Selon un autre mode de réalisation, correspondant à un capteur légèrement mobile, les variations de position d'attitude du réseau antennaire restant faibles vis-à-vis de l'émetteur intercepté, le critère de similarité est déterminé en introduisant un bruit de modèle $\overline{b} = \begin{bmatrix} 0 \\ 0 \end{bmatrix}$ entre deux mesures de polarisation $V1$ et $V2$ séparées par une durée T, prenant en compte l'évolution de l'inclinaison de l'ellipse entre les deux mesures :
en déterminant la covariance du bruit de modèle

$$M_b = \begin{bmatrix} \sigma_b^2 & 0 \\ 0 & 0 \end{bmatrix}$$

covariance du bruit de modèle
avec un écart-type

$$\sigma_b^2 = \frac{1}{4} da_{max}^2 .T^2 + \sigma_\omega^2$$

et en calculant la distance statistique de Mahalanobis étendue en introduisant la covariance Mb du bruit de modèle :

$$s(V_1, V_2) = \max\left\{0, \quad 1 - \alpha.\sqrt{(V_1 - V_2)^T (M_1 + M_2 + M_b)^{-1} (V_1 - V_2)}\right\}$$

où $\alpha$ est une mesure d'inclinaison

Selon un troisième mode, adapté aux situations où le capteur est fortement mobile, une première étape pour déterminer le critère de similarité consiste à corriger la mesure d'inclinaison de l'ellipse de polarisation en prenant en compte les informations de navigation du porteur, en effectuant un changement de repère du plan de polarisation, par une rotation dans le plan de polarisation permettant de passer du repère [$u_h$ $u_v$] lié au réseau d'antenne calibré et à l'assiette au repère [$u'_h$ $u'_v$] lié à l'horizontale du lieu, et lors d'une deuxième étape à calculer

$$s(V_1, V_2) = \max\left\{0, \quad 1 - \beta.\sqrt{(V_1 - V_2)^T (M_1 + M_2)^{-1} (V_1 - V_2)}\right\}.$$

Le procédé selon l'invention s'applique, par exemple, pour des signaux de télécommunications à désentrelacer ou pour des signaux radar.

L'invention concerne aussi un dispositif permettant de désentrelacer des signaux électromagnétiques reçus sur un réseau antennaire, ledit réseau antennaire étant associé à un module de traitement des signaux adapté à exécuter les étapes du procédé présentant les caractéristiques précitées.

D'autres caractéristiques et avantages du dispositif selon l'invention apparaîtront mieux à la lecture de la description qui suit d'un exemple de réalisation donné à titre illustratif et nullement limitatif annexé des figures qui représentent :

- la figure 1 représente un exemple d'architecture permettant la mise en œuvre du procédé selon l'invention,
- la figure 2, une représentation de la modélisation de la polarisation en réception,

- la figure 3, une modélisation de la prise en compte de la mesure de polarisation selon l'invention,
- les figures 4 et 5, un exemple de mise en œuvre du procédé selon l'invention dans un traitement de segmentation COMINT.

Afin de mieux faire comprendre l'objet de l'invention, la description donnée ci-après concerne un procédé de séparation d'émissions électromagnétiques pour des signaux de télécommunications.

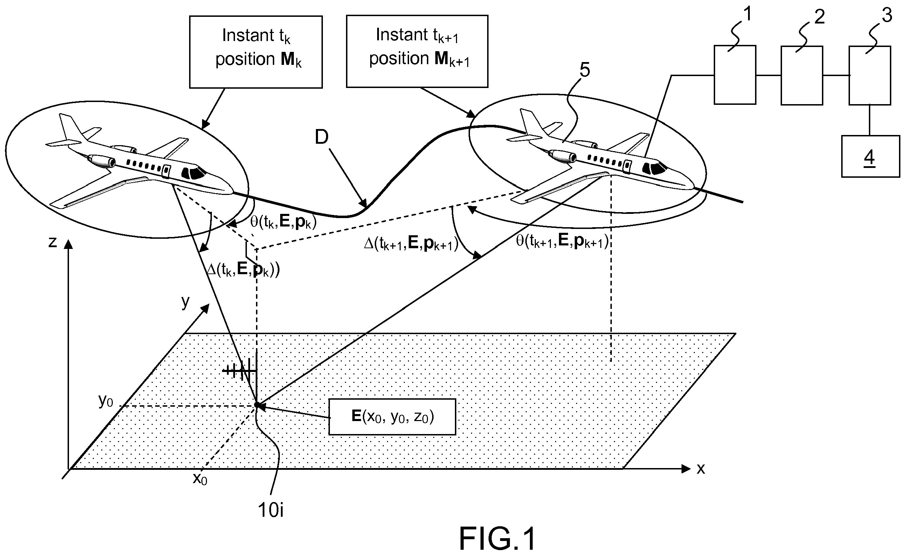

La figure 1 schématise un exemple de système permettant la mise en œuvre du procédé selon l'invention. Plusieurs sources émettent des signaux dans différentes directions. Un capteur ou un réseau de capteurs associé à un dispositif de traitement des données reçoit les signaux émis par les différentes sources 10i ou E.

Un exemple d'architecture générale de l'équipement d'interception d'émission et de localisation des émetteurs selon l'invention est représenté à la figure 1. Il comporte un réseau antennaire 1, un dispositif de réception 2, un circuit d'acquisition 3 des signaux, un module 4 d'extraction et de traitement des données. Le réseau antennaire est par exemple disposé sur un porteur 5 repérable par sa position et son attitude.

Le réseau antennaire 1 reçoit un ensemble de signaux en provenance d'émetteurs que l'on cherche à différencier. L'objectif est notamment de séparer les signaux reçus sur le système antennaire, de regrouper les détections élémentaires par émission, c'est-à-dire de réaliser une segmentation des mesures par classification non supervisée, plus connue sous le terme anglo-saxon « clustering ».

L'idée mise en œuvre par le procédé selon l'invention consiste notamment à exploiter la mesure de la polarisation comme un critère de similarité supplémentaire dans le traitement de classification non supervisé, connu de l'Homme du métier.

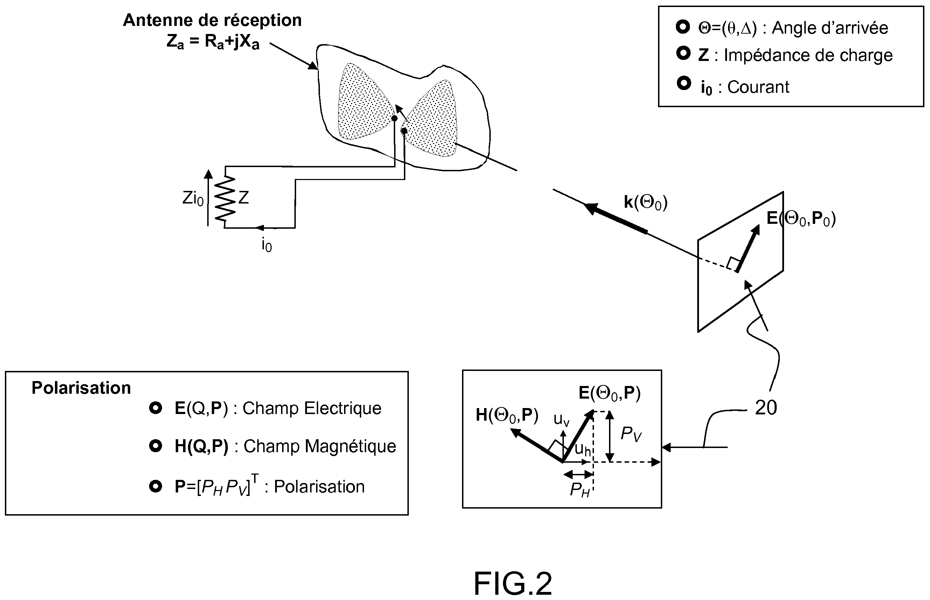

Afin de mieux faire comprendre l'objet de l'invention, un rappel sur la mesure de la polarisation va être donné à la figure 2.

La mesure de polarisation est une estimation à un facteur complexe près du vecteur de Jones **J,** bien connu des gens du métier. Ce vecteur permet de caractériser le comportement du champ électrique **E** d'une onde plane monochromatique dans le plan d'onde 20 (plan de polarisation) orthogonal au vecteur d'onde **k**.

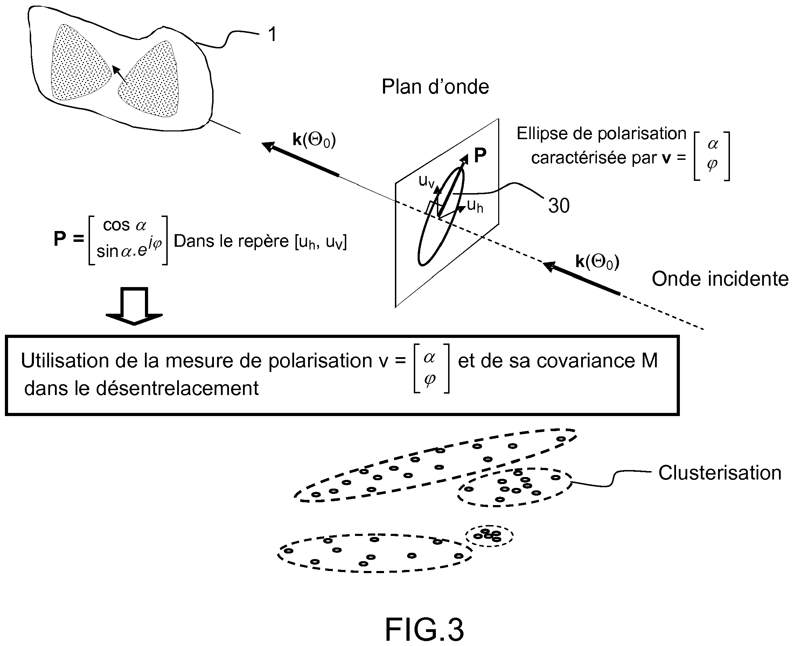

D'une façon générale, l'extrémité du vecteur **E** décrit, en fonction du temps dans le plan de polarisation, une ellipse 30, figure 3, caractérisée dans un repère [$u_h$ $u_v$], par une inclinaison $\alpha$, un demi petit axe a, un demi grand axe b et un sens de parcours. L'estimation du vecteur de Jones à un facteur complexe près peut être caractérisée par un vecteur unitaire **p** de composantes $p_h$ et $p_v$ telles que :

$$P_h = \cos \alpha$$

$$P_v = \sin\alpha e^{j\varphi}$$

où $\alpha$, abs(cp) (valeur absolue de $\varphi$) et signe(cp) définissent respectivement l'inclinaison, l'angle d'ellipticité et le sens de parcours de l'ellipse de polarisation dans le référentiel [$u_h$ $u_v$].

La mesure de polarisation est supposée donnée par l'estimation du vecteur unitaire **p** = [$p_h$ $p_v$]' ou de façon équivalente par le rapport complexe $P_v$ / $P_h$ (=$\tan\alpha e^{j\varphi}$) ou encore par le couple ($\alpha$, $\varphi$) (ou par le vecteur **v** = [$\alpha$ $\varphi$]').

La précision de la mesure de polarisation est supposée décrite par une matrice de covariance sur les paramètres ($\alpha$, $\varphi$).

Le choix de la base [$u_h$ $u_v$] comme référentiel géométrique est arbitraire mais lié au référentiel de l'antenne ou réseau antennaire. En considérant que **$u_h$** caractérise la polarisation linéaire se propageant dans le plan [$u_h$ **k**] et que **$u_v$** caractérise la polarisation linéaire se propageant dans le plan [**k** $u_v$]**,** on observe que le vecteur **p** représente la décomposition du champ **E** dans la base orthonormée [$u_h$ $u_v$]. Par abus de langage, on dénomme respectivement les polarisations $P_h$ et Pv, composantes horizontale et verticale, bien qu'elles ne le soient véritablement que lorsque le référentiel de l'antenne ou réseau antennaire coïncide avec l'horizontale et la verticale du lieu (c'est à dire en contexte embarqué lorsque l'attitude du porteur est horizontale) et que lorsque l'onde se propage dans le plan horizontal.

La figure 3 schématise une représentation de l'utilisation de la mesure de polarisation dans le désentrelacement des signaux reçus sur le récepteur de la figure 1 dont plusieurs exemples vont être détaillés ci-après.

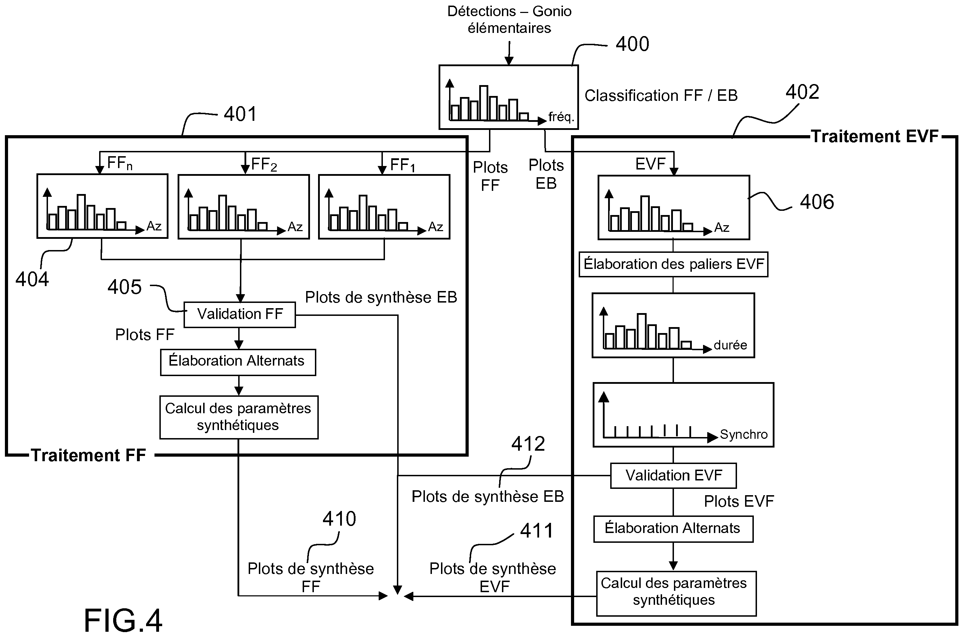

La figure 4 décrit un exemple de mise en œuvre du procédé dans un traitement de segmentation COMINT et une manière de prendre en compte le critère supplémentaire de polarisation issu de mesures de polarisation.

Un traitement typique de segmentation COMINT consiste à réaliser un histogramme en fréquence sur les données de détection-goniométries élémentaires (plots élémentaires), 400, puis à séparer les émissions de type fréquence fixe (FF), 401, des émissions de type pulsées ou « bursts » EB, 402, sur un critère de taux d'occupation fréquentiel. Les plots FF sont ensuite transmis à une première chaîne de traitement FF qui va réaliser, pour chacune des fréquences actives un histogramme 404 en azimut permettant de consolider le regroupement sur critère de direction d'arrivée DOA, par exemple, et de valider les pistes FF 405.

Les émissions de type EB, son transmises à une deuxième chaîne de traitement, 402, qui va segmenter les émissions en évasion de fréquence EVF, 406, ainsi que les émissions burstées isolées sur la base de critères de direction d'arrivée DOA (histogramme en azimut), puis d'estimation des fréquences de sauts 407, et des durées de palier 408, afin de compléter la segmentation en durée et synchronisation à l'aide d'histogrammes. Les classes obtenues sont ensuite fusionnées et synthétisées, pour l'élaboration de plots de synthèse de type FF, EVF et EB respectivement 410, 411, 412 par des méthodes connues de l'Homme du métier.

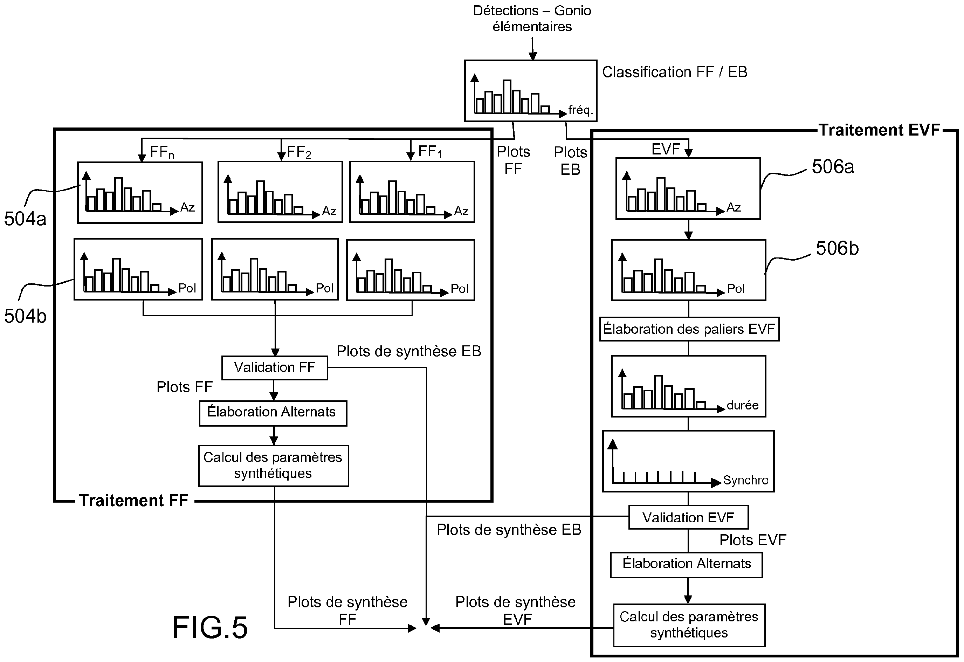

La prise en compte du critère de polarisation peut être réalisée sur les classes obtenues à la suite des histogrammes en azimut en introduisant par exemple un calcul d'histogramme en polarisation, ou bien un partitionnement basé sur la mesure de similarité en polarisation (une définition du critère de similarité est donnée plus loin dans la description), afin de ne regrouper dans une même classe que les détections de polarisation compatibles en polarisation. L'ajout de cette étape de segmentation sur critère de polarisation 504b, 506b, est illustré sur la figure 5.

La polarisation de l'émetteur (c'est à dire de la source d'émission) est supposée constante. Il convient cependant de prendre en compte les variations de la mesure de polarisation entre des mesures successives occasionnées par les éventuels mouvements du porteur. La variation entre deux mesures de polarisation d'une même émission effectuées à deux instants sensiblement espacés est causée à la fois par l'évolution de la configuration géométrique (défilement angulaire du porteur du réseau antennaire entrainant une variation de l'incidence du vecteur d'onde et donc une variation de la polarisation perçue qui peut être vue comme une projection de la polarisation de l'émetteur dans le plan d'onde reçue) et par les changements d'assiette du porteur (entrainant une rotation du repère [$\mathbf{u_h}\ \mathbf{u_v}$] dans le plan de polarisation, qui affecte la mesure d'inclinaison de l'ellipse de polarisation).

Selon une première variante de réalisation, le procédé est utilisé sur des émetteurs fixes dans le cas de récepteurs ou intercepteurs des signaux émis fixes sur le porteur. Le procédé utilise une mesure de polarisation « brute ».

La prise en compte de la mesure de polarisation pour comparer deux détections se traduit en considérant un critère de similarité de polarisation basée sur la distance de Mahanalobis, bien connue des gens du métier. Considérons deux détections $D_1$ et $D_2$ des signaux électromagnétiques sur le réseau antennaire, les mesures de polarisation correspondant à ces détections sont données, par exemple, par un vecteur de polarisation complexe ($\alpha$, $\varphi$) :

$$V_1 = \begin{bmatrix} \alpha_1 \\ \varphi_1 \end{bmatrix} \text{ paramètres de polarisation de la détection D}_1$$

$$V_2 = \begin{bmatrix} \alpha_2 \\ \varphi_2 \end{bmatrix} \text{ paramètres de polarisation de la détection D}_2$$

Les matrices de covariance associées aux mesures de polarisation (supposées gaussiennes) sont déterminées par des méthodes connues de l'Homme du métier. Soient

$M_1$ la matrice de covariance associée à ($V_1$)
$M_2$ la matrice de covariance associée à ($V_2$)

Si les mesures sur l'inclinaison et l'excentricité de l'ellipse de polarisation sont décorrélées, la matrice de covariance se résume aux écart-type associés $\sigma_\alpha$, $\sigma_\varphi$.

Par définition dans ce premier cas, les variations relatives de position et d'attitude du réseau antennaire du récepteur vis-à-vis d'un émetteur sont supposées négligeables devant la moins bonne valeur des précisions d'estimation de l'inclinaison de polarisation $\max(\sigma_{\alpha 1}, \sigma_{\alpha 2})$. Ceci permet de considérer que les incidences relatives des ondes reçues, et donc les vecteurs d'ondes, sont identiques.

Dans le cas d'une configuration fixe de capteur, le critère de similarité en polarisation est exprimé en utilisant la distance statistique de Mahalanobis connue de l'Homme du métier:

$$d^2{}_M = \left(V_i - V_j\right)^T \left(M_i + M_j\right)^{-1} \left(V_i - V_j\right)$$

où $V_i$, $V_j$ sont les paramètres de polarisation des détections $D_i$, $D_j$ ; $M_i$, $M_j$ les matrices de covariance associées ; l'exposant $^T$ est le signe de transposé et l'indice $_M$ est la signification de Mahalanobis

Cette distance statistique de Mahalanobis permet ensuite de définir une mesure de similarité en polarisation donnée par la formule:

$$s(V_1, V_2) = \max\left\{0, \quad 1 - \beta.\sqrt{(V_1 - V_2)^T (M_1 + M_2)^{-1}(V_1 - V_2)}\right\}$$

où

$$s(V_1, V_2) = \max\left\{0, \quad 1 - \beta.\sqrt{d^2{}_M}\right\}$$

où $\beta$ est un coefficient d'ajustement qui est fixé en choisissant un seuil sur la distance de Mahanalobis. Ce seuil se définit généralement à partir d'une probabilité de non association de mesures portant sur la même entité (le seuil se calcul à partir de cette probabilité d en utilisant la fonction de répartition de la distance de Mahanalobis qui suit une loi du chi2).

Cette mesure de similarité en polarisation est ensuite exploitée dans le procédé de séparation et de regroupement des émissions électromagnétiques comme un critère supplémentaire pour la classification non supervisée.

Elle peut l'être par exemple, soit par contribution à la définition d'une similarité globale multicritères sur les détections qui va donc inclure la polarisation, soit simplement comme un nouveau critère mis en œuvre sur les classes obtenues après classification non supervisée basée sur les critères classiques (mise en cascade des critères). Dans ce dernier cas, si les précisions de mesures en polarisation sont à peu près constantes et homogènes entre elles, il peut être avantageux de limiter la complexité algorithmique introduite par le nouveau critère de partitionnement en privilégiant le recours à des histogrammes sur les mesures de polarisation dont le pas est fixé en fonction des écarts-types de précision.

Selon une deuxième variante de réalisation, les variations de position et d'attitude du réseau antennaire sont faibles, mais non négligeables, devant l'erreur de mesure de la polarisation. Ces variations correspondent, par exemple les variations de position d'attitude du réseau antennaire restent faibles vis-à-vis de l'émetteur intercepté. Dans ce cas, le procédé va introduire un bruit de modèle pour réaliser des comparaisons entre mesures de polarisation.

Considérant une vitesse de défilement angulaire maximum $da_{max}$, la variation d'assiette du réseau antennaire peut être modélisée par un bruit blanc centré d'écart-type angulaire $\sigma_\omega$. Cette variation d'assiette va essentiellement affecter la mesure d'inclinaison $\alpha$.

Entre deux mesures de polarisation *V1* et *V2* séparées par une durée T, le procédé introduit un bruit de modèle b prenant en compte l'évolution de l'inclinaison de l'ellipse entre les deux mesures :

$$\overline{b} = \begin{bmatrix} 0 \\ 0 \end{bmatrix}$$

$$M_b = \begin{bmatrix} \sigma_b^2 & 0 \\ 0 & 0 \end{bmatrix} \text{covariance du bruit de modèle}$$

avec un écart-type

$$\sigma_b^2 = \frac{1}{4}da_{max}^2.T^2 + \sigma_\omega^2$$

$\sigma_b$ est déterminé à partir de la vitesse de défilement angulaire maximum du porteur et de l'écart-type sur l'inclinaison.

Le critère de similarité en polarisation va ensuite utiliser une distance statistique de Mahalanobis étendue en introduisant la covariance $M_b$ du bruit de modèle :

$$s(V_1, V_2) = \max\left\{0, \quad 1 - \alpha.\sqrt{(V_1 - V_2)^T (M_1 + M_2 + M_b)^{-1}(V_1 - V_2)}\right\}$$

Si l'on privilégie une méthode de partitionnement à base d'histogrammes sur les mesures de polarisation plutôt qu'une méthode de partitionnement exploitant la mesure de similarité basé sur la distance de Mahanalobis, la prise en compte du bruit de modèle se traduit par une augmentation du pas de l'histogramme déduit de l'écart-type $\sigma_b$.

Selon une troisième variante de réalisation, adaptée aux situations où le capteur est fortement mobile, par exemple lorsque la valeur de la polarisation observée est fortement modifiée par les variations de position de position et/ou d'attitude du porteur.

Le procédé pour cette troisième variante de mise en œuvre consiste à limiter les effet des variations de position du porteur en limitant l'exploitation de la mesure de polarisation aux traitements de désentrelacement qui interviennent sur un horizon limité, typiquement un cycle capteur (sur la durée d'un cycle capteur, qui est de l'ordre de grandeur de la seconde, la variation de position du porteur peut être considérée comme négligeable devant les précisions de mesures).

Pour ce qui concerne les variations d'attitude du réseau antennaire, considérées comme potentiellement importantes dans ce dernier cas (même sur l'horizon d'un cycle capteur), le procédé repose sur l'exploitation d'information de navigation délivrées par exemple par une centrale de navigation connue de l'Homme du métier et située sur le porteur et sur le choix d'un repère [**u'_h u'_v**] du plan de polarisation qui soit calé sur l'horizontale du lieu et donc indépendant de l'attitude du porteur.

Le choix d'un tel repère implique de corriger la mesure d'inclinaison de l'ellipse de polarisation en prenant en compte les informations de navigation en effectuant un changement de repère du plan de polarisation (rotation dans le plan de polarisation permettant de passer du repère [**u_h u_v**] lié au réseau d'antenne calibré et donc à l'assiette au repère [**u'_h u'_v**] lié à l'horizontale du lieu). Ce repère permet alors de comparer les mesures corrigées lorsque la variation de la position du porteur relativement à l'émetteur reste faible.

Les mesures de polarisation corrigées sont déterminées par la formule suivante, en utilisant les valeurs de V1, V2, corrigées en changeant le repère :

$$s(V_1, V_2) = \max\left\{0, \quad 1 - \beta.\sqrt{(V_1 - V_2)^T (M_1 + M_2)^{-1} (V_1 - V_2)}\right\}$$

Si l'on privilégie une méthode de partitionnement à base d'histogrammes, on comptabilise directement les mesures corrigées avec un pas d'histogramme basé sur les écarts-types de mesure.

## Revendications

**1.** Procédé pour désentrelacer des signaux électromagnétiques reçus sur un réseau (1) de capteurs positionnés sur un porteur (5), ledit réseau de capteurs étant associé à un module (4) de traitement des signaux comportant en combinaison au moins les étapes suivantes :

• acquérir des signaux électromagnétiques issus de plusieurs sources distinctes,
• déterminer un critère de similarité à partir de la mesure de la polarisation desdits signaux électromagnétiques, à partir de deux mesures de détection $D_1$ et $D_2$ des signaux électromagnétiques reçus sur le réseau de capteurs en utilisant la distance statistique de Mahalanobis

$$d^2{}_M = (V_i - V_j)^T (M_i + M_j)^{-1} (V_i - V_j)$$

où $V_i$, $V_j$ sont les paramètres de polarisation des détections $D_i$, $D_j$ ; $M_i$, $M_j$ les matrices de covariance associées ; les mesures de polarisation correspondant à $D_i$, $D_j$ sont données, par un vecteur de polarisation complexe ($\alpha$, $\varphi$) :

$$V_i = \begin{bmatrix} \alpha_i \\ \varphi_i \end{bmatrix} \text{ paramètres de polarisation de la détection } D_i$$

$$V_j = \begin{bmatrix} \alpha_j \\ \varphi_j \end{bmatrix} \text{ paramètres de polarisation de la détection } D_j$$

l'exposant $^T$ est le signe de transposé et l'indice $_M$ est la signification de Mahanalobis
et en calculant une mesure de similarité en polarisation par la formule:

$$s(V_1, V_2) = \max\left\{0, \quad 1 - \beta.\sqrt{(V_1 - V_2)^T (M_1 + M_2)^{-1} (V_1 - V_2)}\right\}$$

Où $\beta$ est un coefficient d'ajustement qui est fixé en choisissant un seuil
sur la distance de Mahanalobis,
• utiliser ledit critère de similarité dans une méthode de classification non supervisée de données afin de séparer
les sources.

2. Procédé selon la revendication 1 **caractérisé en ce que** le critère de similarité est déterminé

en introduisant un bruit de modèle $\bar{b} = \begin{bmatrix} 0 \\ 0 \end{bmatrix}$ entre deux mesures de polarisation $V1$ et $V2$ séparées par une durée T, prenant en compte l'évolution de l'inclinaison de l'ellipse entre les deux mesures
en déterminant la covariance du bruit de modèle ;

$$M_b = \begin{bmatrix} \sigma_b^2 & 0 \\ 0 & 0 \end{bmatrix} \text{covariance du bruit de modèle}$$

avec un écart-type

$$\sigma_b^2 = \frac{1}{4} da_{max}^2.T^2 + \sigma_\omega^2,$$

et
en calculant la distance statistique de Mahalanobis étendue en introduisant la covariance Mb du bruit de modèle :

$$s(V_1, V_2) = \max\left\{0, \quad 1 - \alpha.\sqrt{(V_1 - V_2)^T (M_1 + M_2 + M_b)^{-1} (V_1 - V_2)}\right\}$$

où a est une mesure d'inclinaison.

3. Procédé selon la revendication 1 **caractérisé en ce que** pour déterminer le critère de similarité,

• une première étape consiste à corriger la mesure d'inclinaison de l'ellipse de polarisation en prenant en compte
les informations de navigation du porteur, en effectuant un changement de repère du plan de polarisation, par
une rotation dans le plan de polarisation permettant de passer du repère [$u_h$ $u_v$] lié au réseau d'antenne calibré
et à l'assiette au repère [$u'_h$ $u'_v$] lié à l'horizontale du lieu, et
• lors d'une deuxième étape on calcule

$$s(V_1, V_2) = \max\left\{0, \quad 1 - \beta.\sqrt{(V_1 - V_2)^T (M_1 + M_2)^{-1} (V_1 - V_2)}\right\}.$$

4. Procédé selon l'une des revendications 1 à 3 **caractérisé en ce que** les signaux électromagnétiques à désentrelacer
sont des signaux de télécommunications.

5. Procédé selon l'une des revendications 1 à 3 **caractérisé en ce que** les signaux électromagnétiques à désentrelacer
sont des signaux radar.

**6.** Dispositif permettant de désentrelacer des signaux électromagnétiques reçus sur un réseau antennaire (1), ledit réseau antennaire étant associé à un module (4) de traitement des signaux adapté à exécuter les étapes du procédé selon l'une des revendications 1 à 5.

**Patentansprüche**

**1.** Verfahren zum Entschachteln von auf einem Netzwerk (1) von auf einem Träger (5) positionierten Sensoren empfangenen elektromagnetischen Signalen, wobei das Sensornetzwerk mit einem Modul (4) zum Verarbeiten von Signalen assoziiert ist, das in Kombination mindestens die folgenden Schritte beinhaltet:

• Erfassen von elektromagnetischen Signalen von mehreren separaten Quellen,
• Bestimmen eines Ähnlichkeitskriteriums auf der Basis des Messwerts der Polarisation der elektromagnetischen Signale, auf der Basis von zwei Detektionsmesswerten $D_1$ und $D_2$ von auf dem Sensornetzwerk empfangenen elektromagnetischen Signalen unter Nutzung der statistischen Mahalanobis-Distanz

$$d^2{}_M = \left(V_i - V_j\right)^T \left(M_i + M_j\right)^{-1} \left(V_i - V_j\right)$$

wobei $V_i$, $V_j$ Polarisationsparameter der Detektionen $D_i$, $D_j$ sind;
$M_i$, $M_j$ assoziierte Kovarianzmatrizen sind;
die Polarisationsmesswerte die $D_i$, $D_j$ entsprechen, durch einen komplexen Polarisationsvektor ($\alpha$, $\varphi$) gegeben werden:

$$V_i = \begin{bmatrix} \alpha_i \\ \varphi_i \end{bmatrix} \text{Polarisationsparameter der Detektion } D_i,$$

$$V_j = \begin{bmatrix} \alpha_j \\ \varphi_j \end{bmatrix} \text{Polarisationsparameter der Detektion } D_j,$$

wobei die Exponente $^T$ das Transponierungszeichen ist und der Index $_M$ die Bedeutung von Mahalanobis ist, und unter Berechnung eines Polarisationsähnlichkeitsmesswerts durch die Formel:

$$s(V_1, V_2) = \max\left\{0, \quad 1 - \beta.\sqrt{\left(V_1 - V_2\right)^T \left(M_1 + M_2\right)^{-1} \left(V_1 - V_2\right)}\right\}$$

wobei $\beta$ ein Justierkoeffizient ist, der durch Wählen eines Schwellenwerts für die Mahanalobis-Distanz festgelegt wird,
• Nutzen des Ähnlichkeitskriteriums in einem nicht überwachten Datenklassifizierungsverfahren, um die Quellen zu trennen.

**2.** Verfahren nach Anspruch 1, **dadurch gekennzeichnet, dass** das Ähnlichkeitskriterium durch Einführen von Modellrauschen $\overline{b} = \begin{bmatrix} 0 \\ 0 \end{bmatrix}$ zwischen zwei Polarisationsmesswerten $V1$ und $V2$ bestimmt wird, getrennt durch eine Dauer T, unter Berücksichtigung der Entwicklung der Neigung der Ellipse zwischen den beiden Messwerten unter Bestimmung der Kovarianz des Modellrauschens;

$$M_b = \begin{bmatrix} \sigma_b^2 & 0 \\ 0 & 0 \end{bmatrix} \text{Kovarianz des Modellrauschens}$$

mit einem Abweichungstyp

$$\sigma_b^2 = \frac{1}{4} da_{\max}^2 . T^2 + \sigma_\omega^2 ,$$

und
unter Berechnung der statistischen erweiterten Mahalanobis-Distanz unter Einführung der Kovarianz Mb des Modellrauschens:

$$s(V_1, V_2) = \max\left\{0, \quad 1 - \alpha.\sqrt{(V_1 - V_2)^T (M_1 + M_2 + M_b)^{-1}(V_1 - V_2)}\right\}$$

wobei $\alpha$ ein Neigungsmesswert ist.

3.  Verfahren nach Anspruch 1, **dadurch gekennzeichnet, dass** zum Bestimmen des Ähnlichkeitskritierums

    • ein erster Schritt im Korrigieren des Neigungsmesswerts der Polarisationsellipse unter Berücksichtigung der Navigationsinformationen des Trägers durch Bewirken einer Änderung des Bezugspunkts der Polarisationsebene durch eine Rotation in der Polarisationsebene besteht, die die Passage von dem mit dem kalibrierten Antennennetzwerk verbundenen Bezugspunkt $[u_h\ u_v]$ zu der mit der Horizontalen des Orts verbundenen Bezugsplatte $[u'_h\ u'_v]$ zulässt, und
    • in einem zweiten Schritt

$$s(V_1, V_2) = \max\left\{0, \quad 1 - \beta.\sqrt{(V_1 - V_2)^T (M_1 + M_2)^{-1}(V_1 - V_2)}\right\}.$$

    berechnet wird.

4.  Verfahren nach einem der Ansprüche 1 bis 3, **dadurch gekennzeichnet, dass** die zu entschachtelnden elektromagnetischen Signale Telekommunikationssignale sind.

5.  Verfahren nach einem der Ansprüche 1 bis 3, **dadurch gekennzeichnet, dass** die zu entschachtelnden elektromagnetischen Signale Radarsignale sind.

6.  Vorrichtung, die das Entschachteln von auf einem Antennennetzwerk (1) empfangenen elektromagnetischen Signalen zulässt, wobei das Antennennetzwerk mit einem Signalverarbeitungsmodul (4) assoziiert ist, das zum Ausführen der Schritte des Verfahrens nach einem der Ansprüche 1 bis 5 ausgelegt ist.

**Claims**

1.  Method for de-interleaving electromagnetic signals received on an array (1) of sensors positioned on a carrier (5), said array of sensors being associated with a signal processing module (4) comprising, in combination, at least the following steps:

    • acquiring electromagnetic signals from a plurality of distinct sources,
    • determining a similarity criterion from the measurement of the polarization of said electromagnetic signals from two measurements of detection $D_1$ and $D_2$ of the electromagnetic signals received on the array of sensors by using the Mahalanobis statistical distance

$$d^2{}_M = \left(V_i - V_j\right)^T \left(M_i + M_j\right)^{-1} \left(V_i - V_j\right)$$

where $V_i$, $V_j$ are parameters of polarization of the detection $D_i$, $D_j$;
$M_i$, $M_j$ are the associated covariance matrices;
the polarization measurements corresponding to $D_i$, $D_j$ are given by a complex polarization vector ($\alpha$, $\varphi$):

$$V_i = \begin{bmatrix} \alpha_i \\ \varphi_i \end{bmatrix} \text{ polarization parameters of the detection } D_i$$

$$V_j = \begin{bmatrix} \alpha_j \\ \varphi_j \end{bmatrix} \text{ polarization parameters of the detection } D_j$$

the exponent $^T$ is the transposed sign and the index $_M$ is the Mahalanobis significance
and then by computing a measurement of similarity in polarization by the formula:

$$s(V_1, V_2) = \max\left\{0, \quad 1 - \beta.\sqrt{\left(V_1 - V_2\right)^T \left(M_1 + M_2\right)^{-1} \left(V_1 - V_2\right)}\right\}$$

where $\beta$ is an adjustment coefficient fixed by choosing a threshold on the Mahanalobis distance,
• using said similarity criterion in an unsupervised data classification method so as to separate the sources.

2. Method according to Claim 1, **characterized in that** the similarity criterion is determined by introducing a model

noise $\overline{b} = \begin{bmatrix} 0 \\ 0 \end{bmatrix}$ between two polarization measurements $V1$ and $V2$ separated by a time T, taking into account the trend of the inclination of the ellipse between the two measurements by determining the covariance of the model noise:

$$M_b = \begin{bmatrix} \sigma_b^2 & 0 \\ 0 & 0 \end{bmatrix} \text{covariance of the model noise}$$

with a standard deviation

$$\sigma_b^2 = \frac{1}{4} da_{\max}^2.T^2 + \sigma_\omega^2,$$

and
by computing the extended Mahalanobis statistical distance by introducing the covariance Mb of the model noise:

$$s(V_1, V_2) = \max\left\{0, \quad 1 - \alpha.\sqrt{\left(V_1 - V_2\right)^T \left(M_1 + M_2 + M_b\right)^{-1} \left(V_1 - V_2\right)}\right\}$$

where $\alpha$ is an inclination measure.

3. Method according to Claim 1, **characterized in that**, to determine the similarity criterion,

   • a first step consists in correcting the measurement of inclination of the polarization ellipse by taking into account the navigation information of the carrier, by performing a change of reference frame of the polarization plane, by a rotation in the polarization plane making it possible to change from the reference frame [$u_h\ u_v$] linked to both the calibrated antenna array and to the trim to the reference frame [$u'_h\ u'_v$] linked to the horizontal of the place, and
   • during a second step, the following is computed

$$s(V_1, V_2) = \max\left\{0, \quad 1 - \beta.\sqrt{(V_1 - V_2)^T (M_1 + M_2)^{-1} (V_1 - V_2)}\right\}.$$

4. Method according to one of Claims 1 to 3, **characterized in that** the electromagnetic signals to be de-interleaved are telecommunication signals.

5. Method according to one of Claims 1 to 3, **characterized in that** the electromagnetic signals to be de-interleaved are radar signals.

6. Device making it possible to de-interleave electromagnetic signals received on an antenna array (1), said antenna array being associated with a signal processing module (4) suitable for executing the steps of the method according to one of Claims 1 to 5.

FIG.1

**Antenne de réception**

$Z_a = R_a + jX_a$

$Zi_0$  $Z$

$i_0$

$k(\Theta_0)$

$E(\Theta_0, P_0)$

○ $\Theta = (\theta, \Delta)$ : Angle d'arrivée

○ $Z$ : Impédance de charge

○ $i_0$ : Courant

**Polarisation**

○ $E(Q, P)$ : Champ Electrique

○ $H(Q, P)$ : Champ Magnétique

○ $P = [P_H P_V]^T$ : Polarisation

$E(\Theta_0, P)$

$H(\Theta_0, P)$  $u_v$  $P_V$

$u_h$

$P_H$

20

# FIG.2

Plan d'onde

$\mathbf{k}(\Theta_0)$

Ellipse de polarisation caractérisée par $\mathbf{v} = \begin{bmatrix} \alpha \\ \varphi \end{bmatrix}$

P

$u_v$  $u_h$

30

$\mathbf{k}(\Theta_0)$  Onde incidente

$\mathbf{P} = \begin{bmatrix} \cos\alpha \\ \sin\alpha.e^{i\varphi} \end{bmatrix}$ Dans le repère $[u_h, u_v]$

Utilisation de la mesure de polarisation $v = \begin{bmatrix} \alpha \\ \varphi \end{bmatrix}$ et de sa covariance M dans le désentrelacement

Clusterisation

FIG.3

EP 2 605 420 B1

Détections – Gonio
élémentaires

— 400

fréq.

Classification FF / EB

— 402

— 401

**Traitement EVF**

↓FF$_n$    ↓FF$_2$    ↓FF$_1$

Plots
FF

Plots
EB

EVF↓

Az    Az    Az

Az

— 406

404

405

Plots de synthèse EB

Élaboration des paliers EVF

Validation FF

durée

Plots FF

Élaboration Alternats

Calcul des paramètres
synthétiques

Synchro

412

Validation EVF

**Traitement FF**

Plots de synthèse EB

Plots EVF

410

411

Élaboration Alternats

Plots de synthèse
FF

Plots de synthèse
EVF

Calcul des paramètres
synthétiques

FIG.4

EP 2 605 420 B1

FIG.5

**EP 2 605 420 B1**

## RÉFÉRENCES CITÉES DANS LA DESCRIPTION

**Documents brevets cités dans la description**

- US 7269223 B, Learned

- US 6430239 B, Ferreol